# EUROPÄISCHE PATENTSCHRIFT

(11) **EP 0 797 876 B1**
(45) Veröffentlichungstag und Bekanntmachung des Hinweises auf die Patenterteilung: **26.01.2000**
(21) Anmeldenummer: 95940243.9
(22) Anmeldetag: 25.11.1995
(51) Int. Cl.: H04H 1/00

(54) **SCHALTUNGSANORDNUNG UND VERFAHREN ZUR REALISIERUNG EINES RÜCKÜBERTRAGUNGSKANALS VOM EMPFÄNGER ZUM SENDER IN EINEM GLEICHWELLENNETZ**
CIRCUIT ARRAY AND PROCESS FOR CREATING A DATA FEEDBACK CHANNEL FROM RECEIVER TO TRANSMITTER IN A COMMON FREQUENCY NETWORK
CIRCUITERIE ET PROCEDE PERMETTANT DE REALISER UNE VOIE DE RETOUR DE DONNEES D'UN RECEPTEUR A UN EMETTEUR DANS UN RESEAU A FREQUENCE COMMUNE

(30) Priorität: 16.12.1994 DE 4444889
(43) Veröffentlichungstag der Anmeldung: 01.10.1997
(73) Patentinhaber: GRUNDIG Aktiengesellschaft, 90762 Fürth (DE)
(72) Erfinder: ZUMKELLER, Markus, D-71409 Schwaikheim (DE)
(86) Internationale Anmeldenummer: EP9504645
(87) Internationale Veröffentlichungsnummer: WO9619052

(56) Entgegenhaltungen:
- EP-A- 0 232 446
- EP-A- 0 616 445
- EP-A- 0 641 096
- DE-A- 4 138 770

## Beschreibung

Die Erfindung betrifft ein Verfahren zur Realisierung eines Rückkanals in einem Gleichwellennetz bei einem Mehrkanal-Übertragungsverfahren gemäß dem Oberbegriff des Patentanspruchs 1 und eine Schaltungsanordnung zur Durchführung des Verfahrens gemäß dem Oberbegriff des Patentanspruchs 14.

Es ist seit langem das Bedürfnis nach einem Rückkanal bei Rundfunkübertragungen vorhanden, um interaktiv die Übertragungsdaten aus einem großen Angebot wählen zu können oder eine Tarifierung gemäß dem tatsächlich erfolgten Medienkonsum durchführen zu können.

Aus der WO 94/01825 ist ein System zurGebührenabrechnung für elektronische Dienstleistungen bekannt. In einer Einrichtung beim Teilnehmer werden die angefallenen Gebühren mit einem Guthaben verglichen, von diesem abgezogen sowie die Nutzung der Dienstleistung ermöglicht. Dabei besteht eine Verbindung zwischen einem Zentralrechner und der Einrichtung beim Teilnehmer.

Dabei ist von Nachteil, daß für die bidirektionale Kommunikation zwischen Teilnehmer und Sendezentrale zwei verschiedene Übertragungsarten gewählt werden. Weiterhin ist es nicht möglich, daß ein interaktiver Betrieb erfolgt, da das System nur für die Gebührenabrechnung vorgesehen ist.

Aus der WO 92/10038 ist ein Gebührenabrechnungssystem für das Kabel-Fernsehen bekannt, bei dem ähnlich wie bei der WO 94/01825 eine Einrichtung beim Teilnehmer vorgesehen ist. Diese weist folgende Baugruppen auf: einen Empfänger für ein erstes Übertragungsverfahren, einen Decodierer, um die Empfangsdaten zu decodieren, eine Überwachungsschaltung, um die Zugangsberechtigung des Teilnehmers zu überprüfen, einen Sender, um Daten in einem zweiten Übertragungsverfahren an die Zentrale zu übertragen und einen Demultiplexer, um die Daten des Hin- und Rückkanals zu trennen.

Ein Nachteil dieser Realisierung besteht darin, daß die Übertragung leitungsgebunden erfolgt und daher für mobile Empfänger nicht realisierbar ist. Weiterhin ist von Nachteil, daß zwei verschiedene Übertragungsverfahren benutzt werden. Zu den Übertragungsverfahren selbst werden keine Angaben gemacht.

Aus der EP 601 523 A1 ist ein Gebührenabrechnungssystem für einen sogenannten "Value Added Service" bekannt, bei dem in einer Zentrale zu jedem Datensatz eine Kennung, die den Datentyp kennzeichnet, hinzugefügt und an den Teilnehmer übertragen wird. Die Einrichtungen bei den Teilnehmern weisen individuelle Identifikations-Codes auf, und speichern die übertragenen Kennungen. Bei Übertragung eines Steuercodes durch die Zentrale können Nutzinformationen durch den Teilnehmer von der Zentrale angefordert werden, die zusammen mit dem Identifikations-Code übertragen werden.

Von Nachteil bei dieser Realisierung ist, daß lediglich beschrieben wird, daß ein Identifikations-Code zu übertragen ist. Dieser dient zur Zuordnung der Übertragungsdaten zu einem bestimmten Terminal. Über das Übertragungsprotokoll bei der Übertragung wird keine Aussage gemacht.

Aus der EP 595354 A1 ist ein Gebührenabrechnungssystem für Rundfunkübertragungen bekannt. Dieses besteht senderseitig aus einem Rechner, der verschiedene Datenarten speichert, einem Empfänger, der diese Daten empfängt und einem Übertragungsformat, das eine Kennung für jede Datenart beinhaltet. Der Empfänger weist dabei Schaltungen zur Datenverarbeitung für jede Datenart auf und einen Speicher, um die Kennungen zu speichern. Von dem Rechner werden Konversionsdaten für die Gebührenberechnung in unregelmäßigen Zeitabständen übertragen, die im Empfänger gespeichert und zusammen mit der Kennung zur Gebührenberechnung benutzt werden. Vom Empfänger werden über eine Telefonleitung Daten an den senderseitigen Rechner zurückübertragen. Dafür benötigt der Empfänger eine vorher durch den Rechner vergebene Zugangsberechtigung.

Ein Nachteil des offenbarten Gebührenabrechnungssystems besteht in der Benutzung einer zusätzlichenTelefonleitung für den Rückübertragungskanal. Sofern diese überhaupt vorhanden ist, fallen zusätzliche Kosten an. Weiterhin weist eine Telefonleitung nur eine sehr kleine Übertragungsbandbreite auf, wodurch die Übertragungskapazität gering ist.

Aus der EP 488289 A2 ist ein leitungsgebundenes bidirektionales Video-Übertragungssystem bekannt. Ein Videosignal im Basisband wird in eine bestimmte Frequenzlage im Hochfrequenzbereich gemischt und auf einer Leitung zum Empfänger übertragen. Die Frequenzlage des zu übertragenden Videosignals wird von einer Steuereinheit nach einer Anforderung durch einen Empfänger bestimmt. Die Steuereinheit steuert die Mischer in Sender und Empfänger, um das Videosignal und das Anforderungssignal in einem nicht benutzten Frequenzbereich zu übertragen.

Ein Nachteil dieser Realisierung ist, daß das Übertragungssystem leitungsgebunden ist und daher für mobile Empfänger nicht benutzt werden kann. Weiterhin wird nicht beschrieben wie bei hoher Genauigkeit die Synchronisation der Mischer aufwandsgünstig erfolgen soll.

Aus EP-A-0 641 096 ist ein Verfahren zur Realisierung eines Rückübertragungskanals von einem Empfänger zu einem Sender in einem Gleichwellennetz bekannt. Die Synchronisation der Frequenz, als auch die zeitliche Synchronisation des Signals im Rückkanal erfolgt durch die Auswertung der im Hinkanal empfangenen Trägerschwingungen oder Synchronisationsimpulse. Nachteilig hierbei ist aber, daß eine konkrete Identifirierung der Sender im Rückkanal nicht gegeben ist.

Aus EP-A-0 616 444 ist ein Verfahren zur Funkkommunikation einer Basisstation mit einem mobilen Funktelefon bekannt. Hieraus sind aber keine Realisierungshinweise für einen Rückkanal in einem Gleichwellennetz zu entnehmen.

Aus EP-A-0 232 446 ist eine bidirektionale Verbindung eines Fernsehgerätes mit einer Sendestation bekannt. Hieraus sind aber ebenfalls keine Realisierungshinweise für einen Rückkanal in einem Gleichwellennetz zu entnehmen.

Der vorliegenden Erfindung liegt die Aufgabe zugrunde, einen Rückübertragungskanal von einem mobilen Funkempfänger zum gerade empfangenen Sender zu realisieren, wobei Sender und Empfänger nach einem Mehrkanal-Übertragungsverfahren in einem Gleichwellennetz arbeiten.

Erfindungsgemäß wird diese Aufgabe durch die in den Ansprüchen 1 und 14 angegebenen Merkmale gelöst.

Das erfindungsgemäße Verfahren weist den Vorteil auf, daß die besonders in einem Gleichwellennetz schwierige Synchronisation von Frequenz und Sendezeitschlitz im Empfänger durch Auswertung der Empfangssignale wesentlich vereinfacht wird. Aufgrund der Frequenz des Sendesignals des Senders, zu dem ein Rückübertragungskanal aufgebaut werden soll, werden Baugruppen im Empfänger synchronisiert, die die Sendefrequenz im Rückübertragungskanal festlegen. Weiterhin wird aufgrund der zeitlichen Abfolge der Empfangsrahmen im Sendesignal des Senders, zu dem ein Rückübertragungskanal aufgebaut werden soll, Baugruppen zur zeitlichen Synchronisation des im Rückübertragungskanal vom Empfänger gesendeten Signals gesteuert.

Vorteilhafte Ausgestaltungen sind den abhängigen Ansprüchen zu entnehmen.

Die Erfindung wird im folgenden anhand der in der Zeichnung dargestellten Ausführungsform näher erläutert und beschrieben. Es zeigt:
- Fig. 1: mehrere Übertragungskanäle über der Frequenz aufgetragen und
- Fig. 2: einen Übertragungsrahmen des Rückübertragungskanals über der Zeit und der Frequenz aufgetragen.

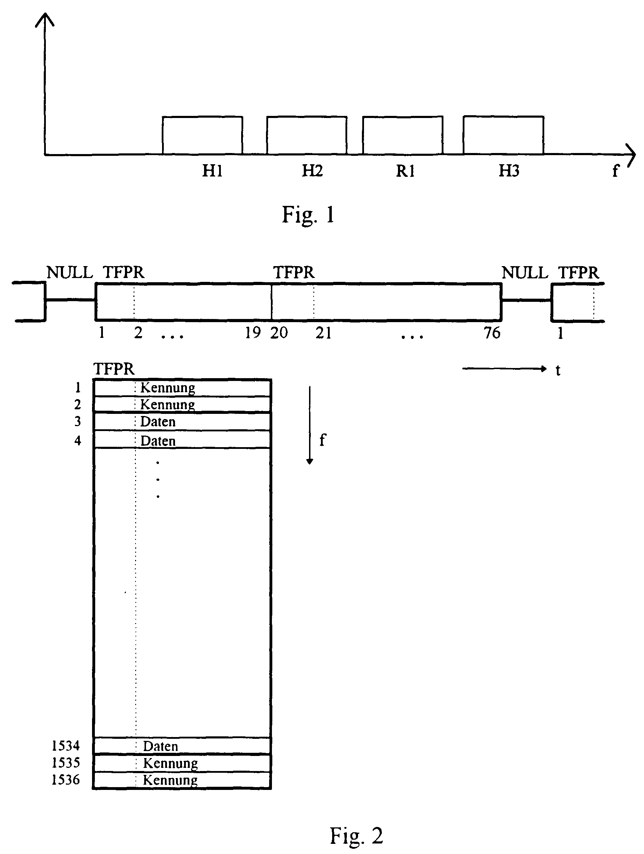

In Fig. 1 sind mehrere Übertragungskanäle für ein COFDM-Übertragungsverfahren mit einer Übertragungsbandbreite von ca. 1,5 M Hz je Übertragungskanal über der Frequenz f aufgetragen. Über die Hinkanäle H1, H2 und H3 werden die Übertragungsdaten vom Sender zum Empfänger gesendet, wie das vom herkömmlichen Rundfunk bekannt ist. Über den Rückübertragungskanal R1 werden Daten von einem oder mehreren Empfängern zum Sender gesendet, um eine interaktive Datenübertragung zu realisieren. Der Rückübertragungskanal kann insbesondere dazu benutzt werden, um spezifische Daten benutzerindividuell anzufordern. Darunter fallen Daten wie beispielsweise Börsenkurse, lokale Verkehrsnachrichten bzw. Verkehrsleitinformationen oder lokale Wettervorhersagen. Damit mehrere Empfänger sich einen Rückübertragungskanal R1 teilen können, wird ein Frequenz- und Zeitmultiplex durchgeführt. Dabei teilt ein zentraler Rechner jedem Empfänger Trägerfrequenzen und Zeitschlitze in Form von Datensymbolen zu.

Um die im Rückübertragungskanal vom Sender empfangenen Daten einem Benutzer zuordnen zu können, was insbesondere bei einer gebührenpflichtigen Übertragung wichtig ist, wird jedem Benutzer oder jedem Empfänger eine individuelle Kennung zugeordnet. Die an den Empfänger im Hinkanal übertragenen Daten beginnen mit der Kennung, damit der Empfänger genau die angeforderten Daten auswertet. Die Kennung kann von einer Einzugsstelle für Gebühren der Service Provider vergeben werden. Der Benutzer kann entweder selbst die

Kennung in den Empfänger einprogrammieren, oder dies von der Einzugsstelle, dem Hersteller oder dem Kundendienst durchführen lassen.

Das im Rückübertragungskanal benutzte Übertragungsformat weist einen Übertragungsrahmen auf, der die gleiche Zeitdauer hat wie der im Hinkanal empfangene Übertragungsrahmen. Weiterhin stimmt die Anzahl der zur Übertragung benutzten Trägerfrequenzen und deren Abstand in der Frequenz und damit die zur Übertragung benutzte Bandbreite in Hin- und Rückübertragungskanal überein. Dadurch ist im Hin- und Rückübertragungskanal immer der gleiche Übertragungsmode eingestellt. Außerdem wird im Hin- und Rückübertragungskanal die gleiche Modulationsart benutzt.

Obwohl Hin- und Rückübertragungskanal in einem anderen Frequenzbereich liegen, besteht durch Frequenzteilung und Frequenzvervielfachung dennoch die Möglichkeit aufgrund der im Hinkanal empfangenen Frequenzen die Sendefrequenzen des Rückübertragungskanals im Empfänger einfach zu erzeugen. Aufgrund der hohen Frequenzgenauigkeit, die in einem Gleichwellennetz gefordert wird, kann durch die Ableitung der Sendefrequenzen im Rückübertragungskanal aus den Frequenzen im Hinkanal wesentlicher Schaltungsaufwand eingespart werden. Aus dem Hochfrequenzteil des Empfängers wird das COFDM-Empfangssignal zur Synchronisation der Sendebaugruppe des Empfängers zugeleitet. In der Sendebaugruppe erfolgt eine entsprechende Teilung und Vervielfachung der Frequenz, um die Sendefrequenz zu erzeugen. Anschließend wird das erzeugte Signal mit der gewünschten Frequenz als Regelsignal für eine Frequenzregelschleife verwendet. Die Frequenzregelschleife legt die Frequenzen der vom Empfänger gesendeten Trägerfrequenzen fest.

Zusätzlich kann die zeitliche Synchronisation des Sendesignals des Empfängers vollständig aufgrund der zeitlichen Abfolge des Empfangssignals gesteuert werden. Hierfür werden mit einem Hüllkurvendetektor die Nullsymbole des Empfangssignals detektiert und einem Schwellwertschalter zugeleitet. Liegt die Signalamplitude unter einem Schwellwert, wird ein Nullsymbol detektiert. Sobald der Schwellwert. überschritten wird, wird das in Fig. 2 dargestellte Signal vom Empfänger gesendet.

Im Unterschied zum Hinkanal wird im Rückübertragungskanal der von zwei Nullsymbolen begrenzte Übertragungsrahmen in mehrere Unterrahmen, beispielsweise vier, unterteilt, zu deren Beginn ein Synchronisationssymbol TFPR gesendet wird. Die übrigen in einem Unterrahmen übertragenen Symbole sind Datensymbole.

Zur Erzeugung eines TFPR-Symbols ist eine entsprechende Baugruppe vorgesehen, wie sie aus herkömmlichen Sendern zur Synchronisation und zur Erzeugung einer Referenz für differenzphasenmodulierte Signale bereits bekannt ist. Die zeitliche Synchronisation dieser Baugruppe erfolgt mittels des Empfangssignals.

Nach dem TFPR-Symbol werden in jedem Unterrahmen die Datensymbole eingefügt, die entsprechend zum Nullsymbol des Empfangssignals verzögert in den Datenstrom des Sendesignals eingefügt werden.

Um die Datensymbole zu erzeugen, ist ein Kodierer, ein Generator für ein COFDM-Signal und ein Modulator für COFDM-Signale vorgesehen. Der Generator für ein COFDM-Signal wird dabei wie beschrieben durch das Empfangssignal bzw. von diesem abgeleitete Signale zeitlich und in der Frequenz synchronisiert. Die vom Benutzer eingegebenen Daten werden codiert und einem COFDM-Signal aufmoduliert. Dabei ist zu beachten, daß im Unterschied zu bekannten Modulatoren eines COFDM-Signals eine gewisse Anzahl Träger im Rückübertragungskanal zur Kennungsübertragung reserviert sind und daher von der Modulation ausgenommen werden.

Es werden im Rückübertragungskanal eine kleine Anzahl Trägerfrequenzen ausschließlich zur Übertragung der den Empfängern zugeordneten Kennungen an den Sender reserviert. Wird Übertragungskapazität angefordert, wird über nur eine der reservierten Trägerfrequenzen in einem ausgewählten Datensymbol vom Empfänger die Kennung übertragen. Das bedeutet, daß ein spezieller Modulator vorgesehen ist, um einer Trägerfrequenz die Kennung aufzumodulieren. Die benutzte Trägerfrequenz und das benutzte Datensymbol werden dabei zufällig aus den dafür reservierten Trägerfrequenzen ausgewählt. Kann die Anforderung vom Sender decodiert werden, wird Übertragungskapazität zugeteilt.

Falls mindestens zwei Empfänger das gleiche Datensymbol und die gleiche Trägerfrequenz zur Kennungsübertragung ausgewählt haben, kann der Sender aufgrund von Interferenz die Anforderung nicht decodieren und teilt auch keine Übertragungskapazität zu. Dies wird im Empfänger nach einer gewissen Zeit festgestellt und es wird auf einer anderen Trägerfrequenz in einem anderen Datensymbol erneut die Kennung gesendet. Dies wird so lange wiederholt, bis dem Empfänger Übertragungskapazität zugeteilt wurde. Die Wartezeit zwischen zwei Kennungsübertragungen kann dabei in Abhängigkeit von der Anzahl der erfolglosen Kennungsübertragungen gewählt werden.

Reserviert man nur vier Trägerfrequenzen für die Kennungsübertragung und wird ein Übertragungsrahmen von 96 ms Dauer in vier Unterrahmen unterteilt, können 16 Kennungsübertragungen in einem Übertragungsrahmen gesendet werden, was ca. 167 pro Sekunde entspricht. Die dabei übertragene Kennung kann bis zu 36 Bit lang sein. Dadurch können über 137 Milliarden Empfänger eine unterschiedliche Kennung erhalten. Da eine derartig große Anzahl Empfänger in einem Gleichwellennetz voraussichtlich nicht vorhanden sein wird, kann alternativ die Kennung zusätzlich codiert werden. Dies dient dem Fehlerschutz und zur Erkennung, ob ein Leistungsmißbrauch vorliegt, bei dem der Empfänger unberechtigt Daten empfängt.

Zur Zuordnung von Übertragungskapazität an einen Empfänger überträgt der Sender über die nicht reservierten Trägerfrequenzen ein Datentelegramm, das mit der Kennung des Empfängers beginnt und das in Datensymbolen und auf Trägerfrequenzen übertragen wird, die nicht bereits benutzt werden. Der Empfänger, der aufgrund seiner Kennungsübertragung eine Zuteilung erwartet, überwacht den Hinkanal, um seine Kennung zu detektieren. Hat er sie innerhalb einer bestimmten Zeit erkannt, wertet er die danach übertragenen Daten als die ihm für den Sendevorgang zur Verfügung gestellten Übertragungssymbole und Trägerfrequenzen. Anschließend beginnt der Empfänger mit dem Aussenden der Daten.

Dadurch erfolgt die Anforderung und Zuteilung von Übertragungskapazität zwischen Empfänger und Sender. In Gebieten mit nur wenig Anforderungen können einem Empfänger vom Sender viele Trägerfrequenzen und ein großer Übertragungszeitschlitz zugeteilt werden. Dadurch wird die Übertragungsdauer entsprechend verkürzt. In Ballungsräumen, wo viele Empfänger gleichzeitig Übertragungskapazität anfordern, werden vorzugsweise nur wenige Trägerfrequenzen und kleine Übertragungszeitschlitze zugeordnet, wodurch viele Empfänger gleichzeitig bedient werden können.

Aufgrund der nur geringen Sendeleistung eines mobilen Empfängers, ist dessen Sendesignal nur von den ihm nächstliegenden Sendern zu empfangen. Da die Sender eines Gleichwellennetzes ohnehin miteinander über Datenleitungen verbunden sind, wird durch einen zentralen Rechner die Feldstärke des Empfangssignals für mehrere Sender ermittelt und es erfolgt aufgrund dessen eine Zuordnung zwischen Sender und Empfänger. Dies kann ähnlich dem Roaming in Funknetzen für Mobiltelefone erfolgen. Dadurch kann die Kapazität des Rückübertragungskanals des Gleichwellennetzes erhöht werden.

Zusätzlich kann dieser zentrale Rechner auch dazu benutzt werden, die jedem einzelnen Empfänger zugeteilte Übertragungskapazität zusammen mit einer Zeitinformation zu speichern und eine entsprechende Gebührenberechnung durchzuführen. Zusätzlich kann zur Gebührenberechnung noch der in Anspruch genommene Dienst und der Service Provider gespeichert werden.

Der zentrale Rechner kann weiterhin dazu benutzt werden, um die Zugangsberechtigung anhand der übertragenen Kennung zu überprüfen. Dies kann durch einen Vergleich mit gespeicherten Kennungen erfolgen, oder durch Anwendung eines Algorithmus, der für eine Zugangsberechtigung zu einem bestimmten Ergebnis führen muß. Dabei kann zwischen verschiedenen Stufen der Zugangsberechtigung unterschieden werden. In einer ersten Stufe kann überprüft werden, ob die empfangene Kennung überhaupt zulässig ist. Falls dies nicht der Fall ist, wird keine Übertragungskapazität zugeteilt. In einer zweiten Stufe kann überprüft werden, ob die empfangene Kennung eine Zugriffsberechtigung auf die angeforderten Daten aufweist. Ist das nicht der Fall, wird eine entsprechende Meldung übertragen und die Verbindung beendet. Alternativ kann für die zweite Stufe auch eine weitere Kennung erforderlich sein.

## Patentansprüche

1. Verfahren zur Realisierung eines Rückübertragungskanals von einem Empfänger zu einem Sender in einem Gleichwellennetz bei Benutzung eines Mehrkanal-Übertragungssystems, bei dem die Übertragungsdaten mehreren Trägerschwingungen, die im Frequenzbereich nebeneinander liegen, aufmoduliert und in durch Synchronisationssymbole getrennten Rahmen übertragen werden, wobei die zeitliche Synchronisation und die Synchronisation der Frequenzen der im Rückübertragungskanal (R1) gesendeten Trägerschwingungen durch Auswertung der im Hinkanal (H1, H2, H3) empfangenen Trägerschwingungen und/oder Synchronisationssymbole (TFPR) erfolgt und dem Empfänger von einem zentralen Rechner Frequenz und Zeitschlitz in Form von Datensymbolen zugeordnet werden.

2. Verfahren nach Anspruch 1,
**dadurch gekennzeichnet,**
daß die Übertragungsdauer eines Rahmens und die Modulationsart im Rückübertragungskanal (R1) identisch mit der im Hinkanal (H1, H2, H3) sind.

3. Verfahren nach Anspruch 1 oder 2,
**dadurch gekennzeichnet,**
daß die Übertragungsbandbreite und der Abstand in der Frequenz zwischen zwei Trägerschwingungen im Rückübertragungskanal (R1) identisch zu der im Hinkanal (H1, H2, H3) sind.

4. Verfahren nach einem der obigen Ansprüche,
**dadurch gekennzeichnet,**
daß ein Rahmen im Rückübertragungskanal (R1 ) in mehrere Unterrahmen aufgeteilt wird, zu deren Beginn jeweils ein Synchronisationssymbol (TFPR) gesendet wird.

5. Verfahren nach einem der obigen Ansprüche,
**dadurch gekennzeichnet,**
daß im Rückübertragungskanal (R1) eine oder mehrere Trägerschwingungen dafür vorgesehen sind, um eine Anforderung von Übertragungskapazität vom Empfänger zum Sender zu übertragen.

6. Verfahren nach einem der obigen Ansprüche;
**dadurch gekennzeichnet,**
daß geräte- und/oder benutzerindividuelle Kennungen vergeben werden, die für eine Anforderung und Zuweisung von Übertragungskapazität übertragen werden.

7. Verfahren nach Anspruch 6,
**dadurch gekennzeichnet,**
daß die benutzerindividuelle Kennung codiert übertragen wird.

8. Verfahren nach Anspruch 6 oder 7,
**dadurch gekennzeichnet,**
daß die jeder Kennung zugewiesene Übertragungskapazität zusammen mit einer Zeitinformation gespeichert und für eine Gebührenabrechnung benutzt wird.

9. Verfahren nach einem der Ansprüche 6 bis 8,
**dadurch gekennzeichnet,**
daß bei einer Zuweisung von Übertragungskapazität vom Sender an den Empfänger die Kennung des Empfängers und/oder des Benutzers sowie die zur Übertragung vorgesehenen Trägerschwingungen und Zeitschlitze übertragen werden.

10. Verfahren nach einem der obigen Ansprüche,
**dadurch gekennzeichnet,**
daß eine weitere Anforderung von Übertragungskapazität auf einer anderen Trägerschwingung und/oder in einem anderen Zeitschlitz übertragen wird, wenn eine bestimmte Zeit nach Anforderung keine Zuweisung von Übertragungskäpazität erfolgt.

11. Verfahren nach einem der obigen Ansprüche,
**dadurch gekennzeichnet,**
daß bei einer wiederholten Anforderung von Übertragungskapazität die dafür benutzte Trägerschwingung und/oder der dafür benutzte Zeitschlitz durch einen Zufallsgenerator und die Dauer zwischen zwei Anforderungen durch die Dringlichkeit der Übertragung festgelegt werden.

12. Verfahren nach einem der obigen Ansprüche,
**dadurch gekennzeichnet,**
daß mehrere Empfänger einen gemeinsamen Rückübertragungskanal (R1) benutzen.

13. Verfahren nach einem der obigen Ansprüche,
**dadurch gekennzeichnet,**
daß aufgrund einer Feldstärkeinformation des von einem oder mehreren Sendern des Gleichwellennetzes empfangenen Anforderungssignals des Empfängers ein Sender ausgewählt wird, der eine Funkverbindung mit dem Empfänger aufbaut.

14. Schaltungsanordnung zur Realisierung eines Rückübertragungskanals von einem Empfänger mit Empfangsbaugruppen zu einem Sender eines Sendernetzes, welches im Gleichwellenbetrieb arbeitet.
**dadurch gekennzeichnet,**
daß das Ausgangssignal einer Hochfrequenzbaugruppe des Empfängers einer Baugruppe zur Frequenzsynchronisation und einer Baugruppe zur zeitlichen Synchronisation zugeleitet wird, daß die Ausgangssignale der Baugruppen zur Frequenzsynchronisation und zur zeitlichen Synchronisation einer Baugruppe zur Erzeugung von Synchronisationssignalen (TFPR) und einer Baugruppe zur Erzeugung von Datensymbolen zugeleitet werden und daß die Baugruppe zur Erzeugung von Datensymbolen aus einem Kodierer, einem Generator zur Erzeugung von COFDM-Symbolen und einem Modulator besteht, wobei dem Empfänger von einem zentralen Rechner Frequenz und Zeitschlitz in Form von Datensymbolen zugeordnet werden.

## Claims

1. Method for creating a feedback channel from a receiver to a transmitter in a common-frequency network using a multichannel transmission system, in which the transmission data are modulated onto a plurality of carrier oscillations which are adjacent to one another in the frequency domain and are transmitted in frames separated by synchronization symbols, wherein the time synchronization and the synchronization of the frequencies of the carrier oscillations transmitted in the feedback channel (R1) are performed by evaluation of the carrier oscillations and/or synchronization symbols (TFPR) received in the outgoing channel (H1, H2, H3) and frequency and time slot in the form of data signals are assigned to the receiver by a central computer.

2. Method according to Claim 1, characterized in that the transmission time of a frame and the type of modulation in the feedback channel (R1) are identical to those in the outgoing channel (H1, H2, H3).

3. Method according to Claim 1 or 2, characterized in that the transmission bandwidth and the frequency spacing between two carrier oscillations in the feedback channel (R1) are identical to those in the outgoing channel (H1, H2, H3).

4. Method according to one of the above claims, characterized in that a frame in the feedback channel (R1) is divided into a plurality of sub-frames at the beginning of each of which a synchronization symbol (TFPR) is transmitted.

5. Method according to one of the above claims, characterized in that, in the feedback channel (R1), one or more carrier oscillations are provided for transmitting a request for transmission capacity from the receiver to the transmitter.

6. Method according to one of the above claims, characterized in that individual appliance and/or user identifiers are allocated which are transmitted for a request for and assignment of transmission capacity.

7. Method according to Claim 6, characterized in that the individual user identifier is transmitted in coded form.

8. Method according to Claim 6 or 7, characterized in that the transmission capacity assigned to each identifier is stored together with an item of time information and is used for fee invoicing.

9. Method according to one of Claims 6 to 8, characterized in that, when transmission capacity is assigned by the transmitter to the receiver, the identifier of the receiver and/or of the user are transmitted, as are the carrier oscillations and time slots provided for the transmission.

10. Method according to one of the above claims, characterized in that a further request for transmission capacity is transmitted on another carrier oscillation and/or in another time slot if transmission capacity is not assigned a certain time after request.

11. Method according to one of the above claims, characterized in that, in the event of a repeated request for transmission capacity, the carrier oscillation used therefor and/or the time slot used therefor are/is determined by a random generator and the time between two requests is determined by the urgency of the transmission.

12. Method according to one of the above claims, characterized in that a plurality of receivers use a common feedback channel (R1).

13. Method according to one of the above claims, characterized in that a transmitter which sets up a radio link to the receiver is selected on the basis of an item of field-strength information for the receiver request signal received by one or more transmitters of the common-frequency network.

14. Circuit arrangement for creating a feedback channel from a receiver having reception units to a transmitter of a transmitter network which operates in common-frequency mode, characterized in that the output signal of a highfrequency unit of the receiver is fed to a frequency synchronization unit and to a time synchronization unit, in that the output signals of the frequency synchronization and time synchronization units are fed to a unit for generating synchronization signals (TFPR) and to a unit for generating data signals, and in that the unit for generating data signals comprises an encoder, a generator for generating COFDM symbols and a modulator, wherein frequency and time slot in the form of data signals are assigned to the receiver by a central computer.

## Revendications

1. Procédé pour réaliser un canal de transmission en retour depuis un récepteur vers un émetteur dans un réseau à fréquence commune dans le cas de l'utilisation d'un système de transmission à canaux multiples, selon lequel les données de transmission modulent plusieurs oscillations de porteuses, qui sont situées côte à côte dans la gamme des fréquences, et sont transmises dans des trames séparées par des symboles de synchronisation, la synchronisation temporelle et la synchronisation des fréquences des oscillations de porteuses émises dans le canal de transmission en retour (R1) s'effectuant par exploitation des oscillations de porteuses et/ou des symboles de synchronisation (TFPR), qui sont reçus dans le canal aller (H1, H2, H3) et une fréquence et un créneau temporel sont associés sous la forme de symboles de données au récepteur, par un calculateur central.

2. Procédé selon la revendication 1, caractérisé en ce que la durée de transmission d'une trame et le type de modulation dans le canal de transmission en retour (R1) sont les mêmes que pour le canal aller (H1, H2, H3).

3. Procédé selon la revendication 1 ou 2, caractérisé en ce que la largeur de bande de transmission et la distance entre les fréquences de deux oscillations de porteuses dans le canal de transmission en retour (R1) sont les mêmes que dans le canal aller (H1, H2, H3).

4. Procédé selon l'une des revendications précédentes, caractérisé en ce qu'une trame dans le canal de transmission en retour (R1) est subdivisée en plusieurs sous-trames, au début desquelles est émis respectivement un symbole de synchronisation (TFPR).

5. Procédé selon l'une des revendications précédentes, caractérisé en ce qu'une ou plusieurs oscillations de porteuses sont prévues dans le canal de transmission en retour (R1) pour transmettre une demande de capacité de transmission du récepteur à l'émetteur.

6. Procédé selon l'une de revendications précédentes, caractérisé en ce que des indicatifs, qui sont transmis pour une demande et une affectation de capacité de transmission, sont alloués à chaque appareil et/ou à chaque utilisateur.

7. Procédé selon la revendication 6, caractérisé en ce que l'indicatif prévu pour chaque utilisateur est transmis de façon codée.

8. Procédé selon la revendication 6 ou 7, caractérisé en ce que la capacité de transmission affectée à chaque indicatif est mémorisée conjointement avec une information de temps et est utilisée pour un règlement de taxes.

9. Procédé selon l'une de revendications 6 à 8, caractérisé en ce que l'indicatif du récepteur et/ou de l'utilisateur ainsi que les oscillations de porteuses et les créneaux temporels, qui sont prévus pour la transmission, sont transmis, dans le cas d'une affectation de capacité de transmission de l'émetteur au récepteur.

10. Procédé selon l'une des revendications précédentes, caractérisé en ce qu'une demande supplémentaire de capacité de transmission est transmise dans une autre oscillation de porteuse et/ou dans un autre créneau temporel, lorsqu'aucune affectation d'une capacité de transmission n'est exécutée pendant un intervalle de temps déterminé après la demande.

11. Procédé selon l'une des revendications précédentes, caractérisé en ce que dans le cas d'une demande réitérée d'une capacité de transmission, l'oscillation de porteuse utilisée à cet effet et/ou le créneau temporel utilisé à cet effet sont fixés au moyen d'un générateur de signaux aléatoires, et l'intervalle de temps entre deux demandes est fixée par l'urgence de la transmission.

12. Procédé selon l'une des revendications précédentes, caractérisé en ce que plusieurs récepteurs utilisent un canal de transmission en retour commun (R1).

13. Procédé selon l'une des revendications précédentes, caractérisé en ce qu'un émetteur, qui établi une une liaison radio avec le récepteur, est sélectionné sur la base d'une information de l'intensité de champ, du signal de demande du récepteur, qui est reçu par un ou plusieurs émetteurs du réseau à fréquence commune.

14. Montage pour la réalisation d'un canal de transmission en retour d'un récepteur comportant des modules de réception à un émetteur d'un réseau d'émetteurs, qui fonctionne selon le fonctionnement à fréquence commune, caractérisé en ce
que le signal de sortie d'un module à haute fréquence du récepteur est envoyé à un module réalisant la synchronisation de fréquence et à un module réalisant la synchronisation temporelle, que les signaux de sortie des modules utilisés pour la synchronisation de fréquence et la synchronisation temporelle sont envoyés à un module servant à produire des signaux de synchronisation (TFPR) et un module servant à produire des symboles de données, et que le module servant à produire des modules de données est constitué par un codeur, un générateur servant à produire des symboles COFDM et un modulateur, la fréquence et le créneau temporel sous la forme de symboles de données étant affectée au récepteur, par un calculateur central.
